# EUROPEAN PATENT APPLICATION

(11) **EP 4 556 708 A1**
(43) Date of publication of application: **21.05.2025**
(21) Application number: 23210232.7
(22) Date of filing: 16.11.2023
(51) Int. Cl.: F03D 7/02, C25B 1/04, F03D 9/19, H02J 3/38, H02J 15/00

(54) **WIND POWER PLANT AND METHOD FOR OPERATING A WIND POWER PLANT**

(71) Applicant: Siemens Gamesa Renewable Energy A/S, 7330 Brande (DK)
(72) Inventor: Lund, Mogens, 6920 Videbaek (DK); Nica, Florin Valentin Traian, 7400 Herning (DK)
(74) Representative: SGRE-Association

(57) **Abstract**

A wind power plant (1), comprising:
one or more generator devices (7) for generating electrical power (P_{G}) from wind power,
a plurality of hydrogen production units (15) for producing hydrogen from the generated electrical power (P_{B}),
a plurality of DC-DC converters (16) each being electrically connected with the one or more generator devices (7) and with a respective one of the plurality of hydrogen production units (15), and each DC-DC converter (16) being configured for supplying power (Pₐ) with a tunable output voltage (Uₐ) to the respective hydrogen production unit (15), and
a control device (28) for controlling the power (Pₐ) supplied by each DC-DC converter (16) to the respective hydrogen production unit (15) based on a current power output (P_{G}) of the one or more generator devices (7).

With the proposed wind turbine plant the supply of power to the plurality of hydrogen production units can be improved.

## Description

The present invention relates to a wind power plant and a method for operating a wind power plant.

Wind turbines convert the wind's kinetic energy into electrical energy. Providing an infrastructure such as electrical cables for transporting the energy produced by the wind turbine from the wind harvesting site to a central station and/or an electrical grid is costly. In particular, in the case of an offshore wind farm having numerous wind turbines, electrically connecting all wind turbines to shore, is a time consuming and expensive endeavor. Recently, the concept of decentralized hydrogen production on an outside platform of an offshore wind turbine has been studied (e.g., EP 4 067 534 A1). Having a hydrogen production apparatus at the wind turbine, the generated electrical energy can be directly converted to hydrogen. Such a wind turbine may be configured to deliver hydrogen in addition to electrical energy or to deliver only hydrogen. In the latter case, an electrical cable for transporting electrical power generated by the wind turbine is not necessary.

It is one object of the present invention to provide an improved wind power plant and an improved method for operating a wind power plant.

Accordingly, a wind power plant is provided. The wind power plant comprises:
one or more generator devices for generating electrical power from wind power,
a plurality of hydrogen production units for producing hydrogen from the generated electrical power,
a plurality of DC-DC converters each being electrically connected with the one or more generator devices and with a respective one of the plurality of hydrogen production units, and each DC-DC converter being configured for supplying power with a tunable output voltage to the respective hydrogen production unit, and
a control device for controlling the power supplied by each DC-DC converter to the respective hydrogen production unit based on a current power output of the one or more generator devices.

The current output of electrical power of the one or more generator devices may vary, for example, because of changing wind conditions. With the proposed wind turbine plant the supply of power to the plurality of hydrogen production units can be improved. In particular, for each hydrogen production unit an own DC-DC converter (direct current-direct current converter) is provided. Further, each DC-DC converter is configured for supplying electrical power to a respective hydrogen production unit.

Furthermore, each DC-DC converter is configured for providing electrical power with a tunable output voltage to the respective hydrogen production unit. The control device is, for example, configured for controlling the power supplied by each DC-DC converter to the respective hydrogen production unit such that the tunable output voltage of one, several or all of the plurality of DC-DC converters is adjusted with continuously changing voltage values.

Thus, by having the control device for controlling each DC-DC converter based on the current power output of the one or more generator devices, the available electrical power can be distributed to the plurality of hydrogen production units in a smart way. In particular, it can be ensured that each hydrogen production unit is operated within its specifications with respect to the range of input voltage. Further, switching off hydrogen production units completely can be avoided to a larger extent. For example, the number of hydrogen production units that need to be switched off completely (e.g., during low winds) can be reduced.

The wind power plant includes, for example, one or more wind turbine installations. A wind turbine installation is an apparatus to convert the wind's kinetic energy into electrical energy (electrical power). The wind turbine installation comprises, for example, a rotor having one or more blades connected each to a hub, a nacelle including at least one generator device, and a tower holding, at its top end, the nacelle. The tower of the wind turbine may be connected (e.g., via a transition piece) to a foundation of the wind turbine. The foundation may be, for example, a foundation in a seabed or a bed of another open water such as a monopile or tripod, a floating foundation floating in the sea or another open water or a concrete foundation.

The one or blades may, for example, be rotatably connected to the hub by a pitch bearing for adjusting a pitch angle of the one or more blades.

The rotor hub is mechanically connected to a rotating shaft (e.g., a main shaft) supported by one or more bearings inside the nacelle. The main shaft may be directly coupled to the generator device for generating electric power. Alternatively, the wind turbine installation may comprise a gear box for transforming the rotation of the main shaft to a rotation of a secondary shaft which is then coupled to the generator device.

Hence, a drive train of the wind turbine installation includes the main rotating shaft, the one or more bearings supporting the main rotating shaft and the generator device. Optionally, the drive train may include in addition a gear box, a secondary shaft and one or more bearings supporting the secondary shaft.

The generator device includes an electrical generator for generating electric power, such as a permanent magnet synchronous machine.

The current power output of the one or more generator devices is, in particular, the actual and/or momentary output of electrical power of the one or more generator devices. The control device may, for example, be configured for receiving a value of the current power output of the one or more generator devices.

The control device may also, for example, be configured for determining and/or estimating the current power output of the one or more generator devices based on secondary parameters. Such secondary parameters may include a wind speed at the one or more wind turbine installations and/or other environmental conditions (e.g., icy rotor blades) influencing the power generation of the wind turbine installations. In this case, the control device may, for example, be configured for receiving a value of one or more secondary parameters (e.g., a wind speed from a wind speed sensor of the respective wind turbine installation and/or the wind power plant).

The wind power plant is, for example, an offshore wind power plant with one or more offshore wind turbine installations. Offshore includes marine environments as well as lakes and other open waters. The wind power plant may, however, also be an onshore wind power plant with one or more onshore wind turbine installations.

The wind power plant forms, for example, an islanded electrical grid. The islanded grid may be an off-grid system which is not connected to an external (e.g., national) grid. However, the wind power plant may also be electrically connected to an external (e.g., national) electrical grid. The external (e.g., national) electrical grid is, for example, an interconnected network for electricity delivery from producers to consumers. The external (e.g., national) electrical grid is, for example, a nation-wide electrical grid.

By having the plurality of hydrogen production units, the electrical energy generated by the one or more generator devices of the plant can be directly and (e.g., fully or almost fully) transformed into green hydrogen. In case that the electrical energy generated by the one or more generator devices is - apart from electrical energy consumed by the wind power plant itself - fully transformed into hydrogen, an electrical cable connection for transporting the generated electrical energy from the wind turbine to an external grid is not necessary ("island mode").

The plurality of hydrogen production units are, for example, configured for producing hydrogen gas by converting water into hydrogen by means of electrical power generated by the one or more generator devices. Thereby, water is separated into hydrogen and oxygen by an electrolysis process. Each of the plurality of hydrogen production units includes, for example, one or more electrolysis units for producing hydrogen gas by electrolysis. Each of the plurality of hydrogen production units includes, for example, an electrolysis cell and/or a stack of electrolysis cells.

The wind power plant includes, for example, a hydrogen production device including the plurality of hydrogen production units and the plurality of DC-DC converters. The hydrogen production device may further include one or more compressor units for compressing the produced hydrogen gas, one or more cooling units for cooling components of the hydrogen production device, a water-supply unit for supplying water to the hydrogen production units, a water-intake unit for taking in water from the sea and/or an open water reservoir and supplying the water to the water-supply unit and/or the hydrogen production units, one or more desalination units for desalinating sea water, and/or one or more hydrogen tanks for storing the produced hydrogen.

Each of the one or more wind turbine installations is, for example, connected by means of a hydrogen tube with another installation for transporting the produced hydrogen to the other installations.

Each of the DC-DC converters is configured for supplying DC power (DC: direct current) to a corresponding hydrogen production unit.

Each of the DC-DC converters is configured for converting an input electrical power with an input voltage to an output electrical power with an output voltage. The output voltage may, for example, have a different voltage value compared to the input voltage. The input electrical current is, for example, input at an input terminal of a respective DC-DC converter. The output electrical current is, for example, output at an output terminal of a respective DC-DC converter.

Each DC-DC converter is, for example, (e.g., directly) electrically connected at its input terminal (e.g., via an AC-DC converter, alternating current-direct current converter) with the one or more generator devices. Further, each DC-DC converter is, for example, (e.g., directly) electrically connected at its output terminal with a respective one of the plurality of hydrogen production units.

The one or more generator devices, the AC/DC converter, the plurality of DC-DC converters and the plurality of hydrogen production units are, for example, electrically connected with each other in series. Further, the plurality of DC-DC converters and the plurality of hydrogen production units may, for example, be connected in parallel to a DC side of the AC/DC converter.

Each of the DC-DC converters is configured for providing an electrical power with a tunable output voltage (e.g., at its output terminal). That means, the output voltage provided by a respective DC-DC converter and supplied to a corresponding hydrogen production unit can be adjusted in an analogue manner. In other words, "tunable output voltage" means that the output voltage can be adjusted in a continuously changing manner such that the value of the output voltage can continuously change (e.g., from a voltage value of zero to a maximum voltage value given, for example, by the rated voltage value of the DC-DC converter).

The control device is, for example, configured for generating a control signal based on the received or determined value of the current power output of the one or more generator devices. Further, the control device is, for example, configured for generating the control signal for each of the plurality of DC-DC converters for supplying power to a respective hydrogen production unit based on the current power output of the one or more generator devices. The control device is, for example, configured for generating the control signal for each of the plurality of DC-DC converters for setting the output voltage of each of the plurality of DC-DC converters. For example, thereby the tunable output voltage of one, several or all of the plurality of DC-DC converters is tuned up or down.

According to an embodiment, the wind power plant comprises at least one AC-DC converter for converting electrical AC current generated by the one or more generator devices into DC current and supplying the DC current to each of the plurality of DC-DC converters.

The one or more generator devices are, for example, configured for generating alternating current (AC current).

The at least one AC-DC converter (e.g., an input terminal of the at least one AC-DC converter) is, for example, electrically connected (e.g., directly) with the one or more generator devices (e.g., with an output terminal of the one or more generator devices). Further, the at least one AC-DC converter (e.g., an output terminal of the at least one AC-DC converter) is, for example, electrically connected (e.g., directly) with each of the plurality of DC-DC converters (e.g., with an input terminal of each of the plurality of DC-DC converters).

According to a further embodiment, the control device is configured for controlling the electrical power supplied by at least one DC-DC converter to the respective hydrogen production unit such that a voltage value of the supplied power is increased or decreased from a non-zero first voltage value to a non-zero second voltage value.

A "non-zero first voltage value" means that in a first state at a first time, the respective hydrogen production unit is running and not switched off completely. Further, a "non-zero second voltage value" means that in a second state at a second time (i.e. timely after the first time), the respective hydrogen production unit is still running and not switched off completely.

Thus, to at least one hydrogen production unit an adapted voltage is supplied without switching the at least one hydrogen production unit on or switching the at least one hydrogen production unit off. By avoiding switching off of hydrogen production units (e.g., of electrolysis cells and/or stacks of electrolysis cells), deterioration of the performance of hydrogen production units can be prevented and/or a lifetime of the hydrogen production units can be increased.

According to a further embodiment, the wind power plant comprises:
one or more wind turbine installations each including one or more mechanical structures, wherein the control device is configured for active oscillation damping of mechanical oscillations of the one or more mechanical structures of the one or more wind turbine installations, the active oscillation damping causing damping-related power output variation of the one or more generator devices, and
one or more storage devices for storing electrical power, wherein the control device is configured for controlling charging and discharging of the one or more storage devices for compensating the damping-related power output variation of the one or more generator devices.

The one or more mechanical structures include, for example, a drive train and/or a tower of the one or more wind turbine installations.

Mechanical components of wind turbine installations are subject to oscillations during operation of the wind turbine installations. For example, tower oscillations may occur. Further, a drive train of the wind turbine may be excited to perform oscillations during operation of the wind turbine. These mechanical oscillations may cause wear or even damage of the respective components. Therefore, an active damping control is provided to stabilize mechanical oscillations such as tower oscillations or drive train oscillations and, thus, to reduce loads on the components of a wind turbine installation.

The active damping control may include a measurement of tower acceleration, nacelle acceleration and/or rotational speed of one or more components of the drive train. Further, based on such measurements, a damping control signal is generated (e.g., sinusoidal offsets) which is added to a power or torque reference supplied to the generator system to control the generator system. Hence, a varying offset (e.g., sinusoidal offset) is added to a power or torque reference supplied to the one or more generator devices to control the one or more generator devices. Hence, the damping control causes a damping-related power output variation at an output terminal of the one or more generator devices. The damping-related power output variation is a timely variation of the power output (e.g., at high frequency).

The wind power plant further comprises one or more further DC-DC converters each being electrically connected to one of the one or more storage devices. The one or more further DC/DC converters are configured for controlling charge and discharge of the one or more storage devices.

In case that multiple further DC-DC converters and multiple storage devices are provided, the multiple pairs of further DC-DC converter and storage device can be electrically connected to each other in parallel.

Furthermore, the one or more pairs of further DC-DC converter and storage device can be electrically connected to the multiple pairs of DC-DC converter and hydrogen production unit in parallel.

The control device may, for example, perform active oscillation damping by being configured for:
receiving oscillation data of mechanical oscillations of the one or more mechanical structures of the one or more wind turbine installations,
generating a damping control signal based on the received oscillation data for the one or more wind turbine installations, and
performing damping control of the one or more generator devices of the one or more wind turbine installations based on the damping control signal causing damping related power output variation at the output terminal of the one or more generator devices.

By providing the one or more storage devices for storing electrical power and configuring the control device for controlling charging and discharging of the one or more storage devices the damping-related power output variation of the one or more generator devices can be compensated. In particular, by discharging the one or more storage devices, additional electrical power is supplied to a DC microgrid (direct current microgrid) including the plurality of hydrogen production units. By charging the one or more storage devices, electrical power is extracted from the DC microgrid including the plurality of hydrogen production units. Hence, it can be avoided that the damping-related power output variation of the one or more generator devices arrives at the hydrogen production units. Thus, the hydrogen production units can be supplied with a (essentially) constant voltage. In other words, a varying input voltage at the hydrogen production units - which decreases the lifetime of the hydrogen production units and/or deteriorates the quality of the produced hydrogen - can be avoided.

According to a further embodiment, the one or more storage devices are configured for charging and discharging electrical power with a frequency of 0.1 Hz or larger, 0.5 Hz or larger, 1 Hz or larger, 5 Hz or larger, 10 Hz or larger and/or 20 Hz or larger.

With one or more fast-charging and fast-discharging storage devices, damping-related power output variation at high frequency can be compensated.

According to a further embodiment, the control device is configured for controlling charging and discharging the one or more storage devices with a frequency of 0.1 Hz or larger, 0.5 Hz or larger, 1 Hz or larger, 5 Hz or larger, 10 Hz or larger and/or 20 Hz or larger.

According to a further embodiment, the wind power plant comprises at least one AC load and at least one DC-AC converter electrically connected with the one or more generator devices and the at least one AC load for supplying AC power to the at least one AC load.

The at least one AC load (alternating current load, i.e. a load that consumes alternating current) includes, for example, one or more auxiliary devices of the wind turbine such as one or more control devices, one or more safety-related devices, one or more heating devices, one or more cooling devices, one or more pumps, one or more lubrication devices, one or more lights, one or more dehumidifier, one or more pitch drives and/or one or more yaw drives.

The at least one DC-AC converter is, in particular, electrically connected with the one or more generator devices via an AC-DC converter.

According to a further embodiment, the wind power plant comprises at least one DC microgrid. Further, the at least one DC microgrid electrically interconnects one, several or all of a group of components including the plurality of DC-DC converters, the plurality of hydrogen production units, the one or more storage devices, one or more further DC-DC converters electrically connected to the one or more storage devices, the at least one AC load and the at least one DC-AC converter electrically connected to the at least one AC load.

By having the at least one DC microgrid, the power balance in the wind power plant can be better managed such that the hydrogen production units can be operated as stable as possible.

In case that the wind power plant comprises more than one DC microgrid, i.e. a plurality of microgrids, the plurality of microgrids are electrically connected to each other.

A DC-AC converter is a direct current-alternating current converter configured for converting direct current into alternating current.

According to a further embodiment, the wind power plant comprises:
at least two DC microgrids,
at least one LV-HV transformer for transforming low-voltage to high-voltage, the at least one LV-HV transformer being electrically connected to a first one of the at least two DC microgrids,
at least one HV-LV transformer for transforming high-voltage to low-voltage, the at least one HV-LV transformer being electrically connected to a second one of the at least two DC microgrids, and
at least one high-voltage cable electrically connecting the LV-HV transformer and the HV-LV transformer with each other.

Using at least one high-voltage cable for electrically connecting the at least two DC microgrids with each other reduces power losses during transporting the power between the at least two DC microgrids. Thus, having the at least two DC microgrids electrically connected with each other by means of a high-voltage cable, the at least two DC microgrids can be arranged with a larger distance to each other without significant power losses.

This opens the possibility to arrange the plurality of hydrogen production units remote from the one or more generator devices. For example, the one or more generator devices (optionally along with the one or more storage devices for compensating oscillation damping-related power out variations) may be arranged at the nacelle of a respective wind turbine installation, while the plurality of hydrogen production units and the plurality of DC-DC converters may be arranged on a lower tower platform of the respective wind turbine installation or on another installation (e.g., an auxiliary installation).

The at least one LV-HV transformer (low voltage-high voltage transformer) is, for example, directly electrically connected to a first one of the at least two DC microgrids. Further, the at least one HV-LV transformer (high voltage-low voltage transformer) is, for example directly electrically connected to a second one of the at least two DC microgrids.

According to a further embodiment, the wind power plant comprises at least two DC microgrids, wherein:
a first one of the at least two DC microgrids is electrically connected to the one or more generator devices,
the first one of the at least two DC microgrids includes the one or more storage units, and/or
a second one of the at least two DC microgrids includes the plurality of hydrogen production units and the plurality of DC-DC converters electrically connected to the plurality of hydrogen production units.

For example, the first one of the at least two DC microgrids is electrically connected (e.g., directly) to an AC-DC converter which is electrically connected (e.g., directly) to the one or more generator devices.

For example, the first one of the at least two DC microgrids comprises a DC link which is electrically connected (e.g., via the AC-DC converter) to the one or more generator devices.

Furthermore, the first one of the at least two DC microgrids includes, for example, the one or more further DC-DC converters electrically connected (e.g., directly) to the one or more storage units.

According to a further embodiment, the wind power plant comprises at least one wind turbine installation including:
a tower,
a nacelle arranged at an upper end of the tower, and
at least one of the one or more generator devices arranged at the nacelle,
wherein the plurality of hydrogen production units and the plurality of DC-DC converters are arranged at the respective nacelle.

In this embodiment, the generator device(s) of a specific wind turbine installation and the plurality of hydrogen production units and the plurality of DC-DC converters are arranged in vicinity to each other. Hence, a single DC microgrid may be sufficient to electrically interconnect the one or more generator devices, a DC link, the plurality of hydrogen production units and the plurality of DC-DC converters.

The "plurality of hydrogen production units and the plurality of DC-DC converters being arranged at the respective nacelle" includes an arrangement in the nacelle (e.g., inside a nacelle housing) and/or at an outside (e.g., outside platform) of a nacelle housing (e.g., on top of the nacelle housing).

A hydrogen production device of the wind power plant may include, in addition to the plurality of hydrogen production units and the plurality of DC-DC converters also further components such as one or more compressors, one or more hydrogen tanks, one or more cooling units, a water-supply unit, a water-intake unit, a desalination unit and the like. Although the plurality of hydrogen production units and DC-DC converters are arranged in this embodiment at the respective nacelle, other components of such a hydrogen production device may be arranged at different locations of the wind power plant.

According to a further embodiment, the wind power plant comprises at least one wind turbine installation including:
a tower,
an outside platform arranged at the tower,
a nacelle arranged at an upper end of the tower, and
at least one of the one or more generator devices arranged at the nacelle,
wherein the plurality of hydrogen production units and the plurality of DC-DC converters are arranged at the outside platform.

In this embodiment, the generator device(s) of a specific wind turbine installation and the plurality of hydrogen production units with the plurality of DC-DC converters are arranged remote to each other. Hence, the wind power plant preferably comprises at least two DC microgrids, a first one of the two microgrids includes the DC link to the one or more generator devices and a second one of the at least two DC microgrids incudes the plurality of hydrogen production units and DC-DC converters. However, it is also possible to use only a single DC microgrid.

Although the plurality of hydrogen production units and DC-DC converters are arranged in this embodiment at the outside platform of the tower of the respective wind turbine installation, other components of the hydrogen production device may be arranged at different locations of the wind power plant.

The outside platform is, for example, arranged at a lower portion of the tower such as a lower half of the tower and/or a lower third of the tower.

According to a further embodiment, the wind power plant comprises:
at least one wind turbine installation including:
   a tower,
   a nacelle arranged at an upper end of the tower, and
   at least one of the one or more generator devices arranged at the nacelle, and
an auxiliary installation including a platform, wherein the plurality of hydrogen production units and the plurality of DC-DC converters are arranged at the platform of the auxiliary installation.

The auxiliary installation is, in particular, an installation separate (e.g., spaced apart) from the at least one wind turbine installation.

The auxiliary installation comprises, for example, an own foundation (e.g., foundation in the seabed, floating foundation, concrete foundation) separate from a foundation of the
at least one wind turbine installation.

In case of an offshore wind power plant, the auxiliary installation is, for example, an offshore auxiliary installation.

In this embodiment, the generator device(s) of a specific wind turbine installation and the plurality of hydrogen production units with the plurality of DC-DC converters are arranged remote to each other. Hence, the wind power plant preferably comprises at least two DC microgrids, a first one of the two microgrids includes the DC link to the one or more generator devices and a second one of the at least two DC microgrids incudes the plurality of hydrogen production units and DC-DC converters.

Although the plurality of hydrogen production units and DC-DC converters are arranged in this embodiment at the platform of the auxiliary installation, other components of the hydrogen production device may be arranged at different locations of the wind power plant.

According to a further embodiment, the wind power plant is an off-grid wind power plant configured for operation in island mode.

By having the hydrogen production units at the wind power plant, the electrical energy generated by the wind power plant can be directly and fully transformed into green hydrogen. Hence, an electrical cable connection for transporting the generated electrical energy from the wind power plant to an external grid such as a national grid is not necessary ("island mode").

According to a further aspect, a method for operating a wind power plant is provided. The method comprises the steps:
a) generating electrical power from wind power,
b) supplying the generated electrical power via a plurality of DC-DC converters to a plurality of hydrogen production units, wherein each DC-DC converter is configured for supplying electrical power with a tunable output voltage to a respective one of the hydrogen production units,
c) controlling the electrical power supplied by each DC-DC converter to the respective hydrogen production unit based on a current power output of the one or more generator devices, and
d) producing hydrogen, by the plurality of hydrogen production units, from the supplied electrical power.

Steps b) and c) are, in particular, carried out simultaneously.

The respective entity, e.g., the control device, may be implemented in hardware and/or in software. If said entity is implemented in hardware, it may be embodied as a device, e.g., as a computer or as a processor or as a part of a system such as a computer system. If said entity is implemented in software it may be embodied as a computer program product, as a function, as a routine, as a program code or as an executable object.

According to a further aspect, the invention relates to a computer program product comprising a program code for executing at least some steps of the above-described method for operating a wind power plant when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the wind power plant of the present invention apply, mutatis mutandis, to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind power plant according to an embodiment;
Fig. 2 shows an embodiment of a nacelle of the wind power plant of Fig. 1;
Fig. 3 shows a further embodiment of a nacelle of the wind power plant of Fig. 1;
Fig. 4 shows a wind power plant according to a further embodiment;
Fig. 5 shows a circuit diagram of a DC microgrid of the wind power plant of Fig. 1 or 4 according to an embodiment;
Fig. 6 shows a control device of the wind power plant of Fig. 1 or 4 according to an embodiment;
Fig. 7 shows a circuit diagram of two DC microgrids of the wind power plant of Fig. 1 or 4 according to an embodiment; and

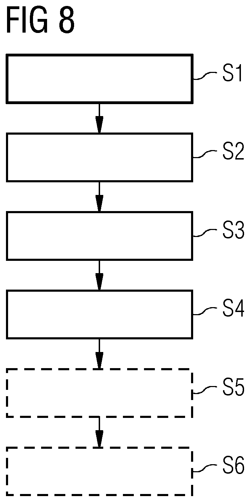

Fig. 8 shows a flow chart illustrating a method for operating a wind power plant according to an embodiment.

In the Figures, like reference numerals designate like or functionally equivalent elements, unless otherwise indicated.

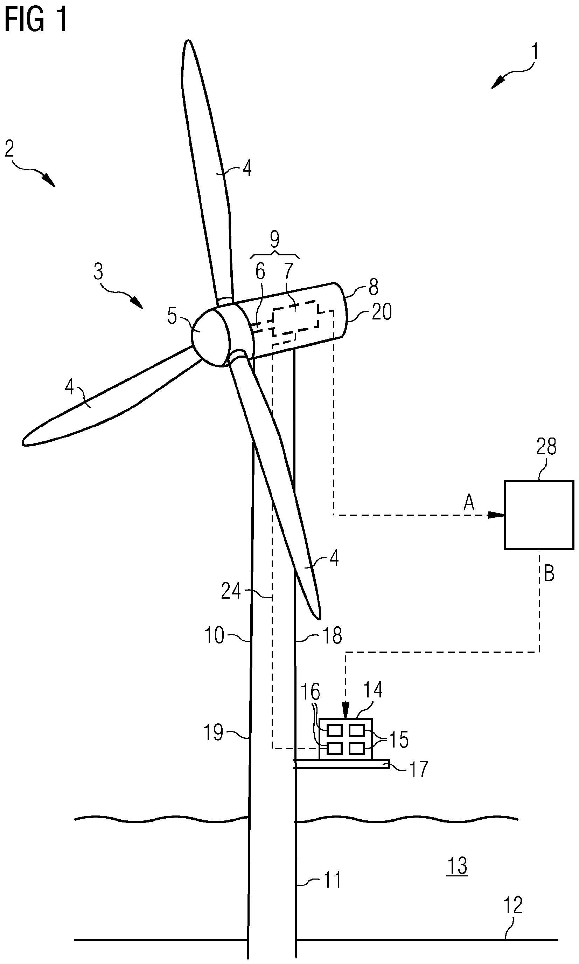

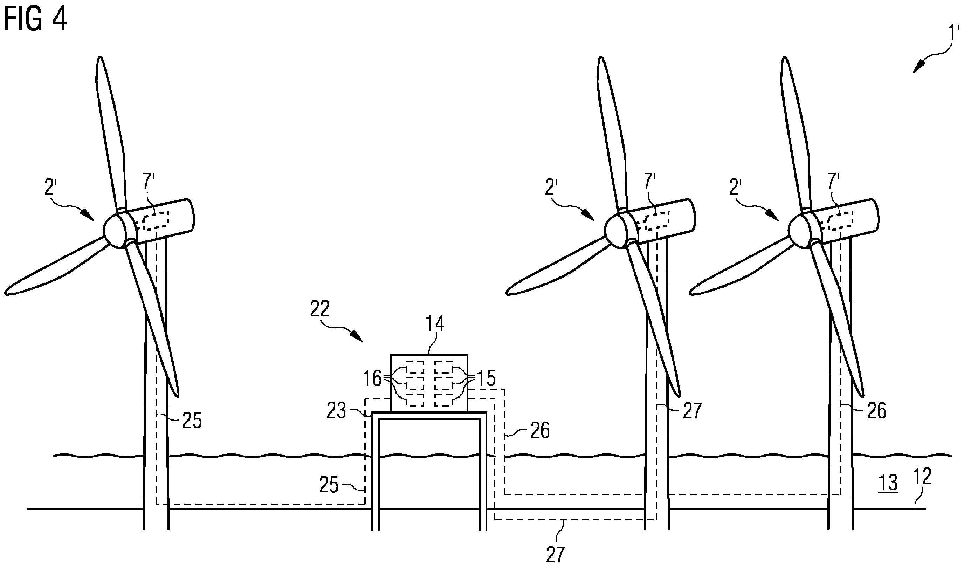

Fig. 1 shows a wind turbine plant 1 with at least one wind turbine installation 2. As shown in Fig. 4, a wind turbine plant 1' may also comprise multiple wind turbine installations 2'.

The wind turbine installation 2 comprises a rotor 3 with one or more blades 4. The one or more blades 4 are coupled to a hub 5 of the rotor 3. The rotor hub 5 is coupled via a rotating shaft 6 to a generator device 7 arranged at a nacelle 8 (e.g., inside or outside of a housing 20 of the nacelle 8). The rotating shaft 6 and the generator device 7 are part of a drive train 9 of the wind turbine installation 2. The drive train 9 may optionally also comprise other components such as one or more bearings and/or a gearbox.

The nacelle 8 is arranged at the upper end of a tower 10 of the wind turbine installation 2. The tower 10 is mechanically connected to a foundation 11 such as a monopile or tripod driven into a seabed 12, a floating foundation (not shown) floating in the sea 13 or another open water or a concrete foundation (not shown).

In the example of Fig. 1, an offshore wind power plant 1 with at least one offshore wind turbine installation 2 is illustrated. However, in other examples, the wind power plant 1 and the at least one wind turbine installation 2 may also be onshore structures.

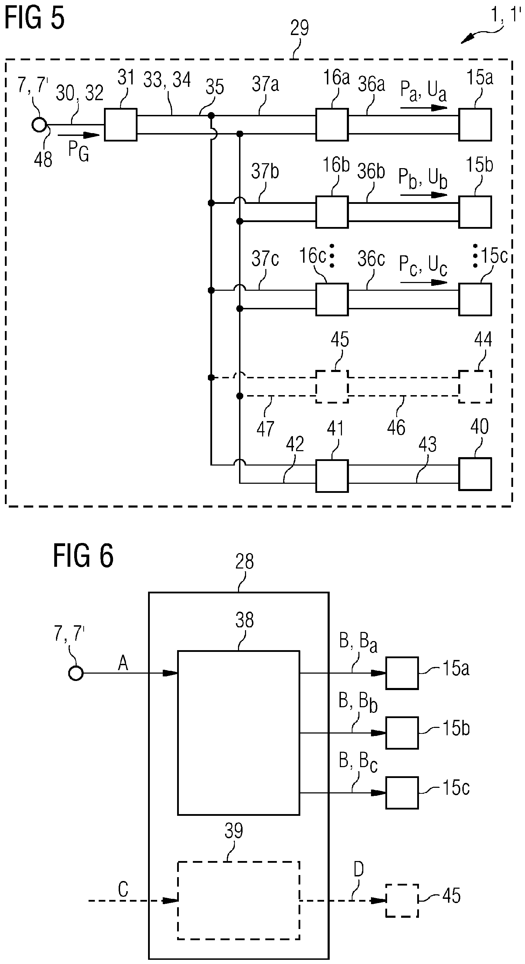

The wind turbine installation 2 in Fig. 1 further includes a hydrogen production device 14 for producing hydrogen from the electrical power generated by the generator device 7. The hydrogen production device 14 includes a plurality of hydrogen production units 15 for producing hydrogen, for example, by an electrolysis process. The hydrogen production device 14 further includes a plurality of DC-DC converters 16 each being electrically connected with the one or more generator devices 7 and with a respective one of the plurality of hydrogen production units 15 (see also Fig. 5). Each DC-DC converter 16 is configured for supplying power with a tunable output voltage to the respective hydrogen production unit 15. Although not shown in the figures, the hydrogen production device 14 may further include other components such as one or more compressor units, one or more cooling units, a water-supply unit, a water-intake unit, one or more desalination units, one or more hydrogen tanks and the like.

In the example of Fig. 1, the wind turbine installation 2 comprises an outside platform 17 arranged at an outer wall 18 of the tower 10. The outside platform 17 is, for example, arranged at a lower portion 19 of the tower 10. Furthermore, in the example of Fig. 1, the plurality of hydrogen production units 15 and the plurality of DC-DC converters 16 of the hydrogen production device 14 are arranged at the outside platform 17. It is noted that the above-described further components (not shown in the figures) of the hydrogen production device 14 may also be arranged at least partly at the outside platform 17 or may be arranged at another location of the wind turbine installation 2 and/or of the wind power plant 1.

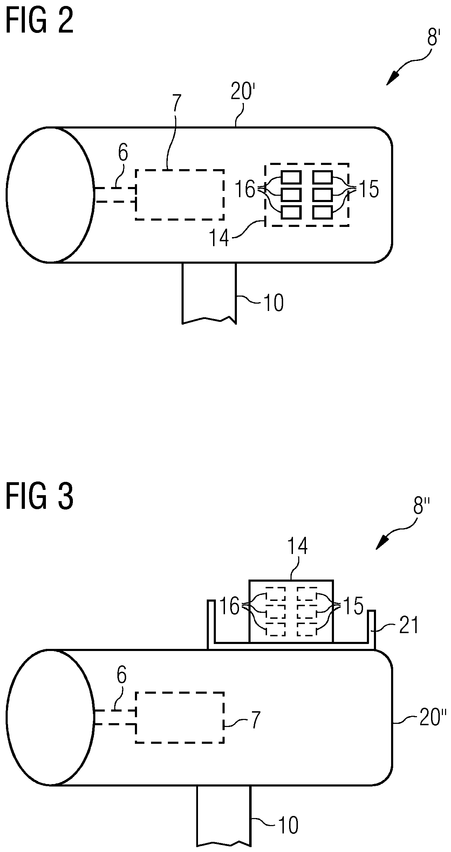

As shown in Figs. 2 and 3, the plurality of hydrogen production units 15 and the plurality of DC-DC converters 16 of the hydrogen production device 14 may also be arranged at the nacelle 8', 8". In this case, the above-described further components (not shown in the figures) of the hydrogen production device 14 may also be arranged at least partly at the nacelle 8' 8" or they may be arranged at another location of the wind turbine installation 2 and/or of the wind power plant 1.

In the example of Fig. 2, the plurality of hydrogen production units 15 and the plurality of DC-DC converters 16 of the hydrogen production device 14 are arranged inside a housing 20' of the nacelle 8'. In the example of Fig. 3, the plurality of hydrogen production units 15 and the plurality of DC-DC converters 16 of the hydrogen production device 14 are arranged outside a housing 20" of the nacelle 8". Exemplarily, the nacelle housing 20" in Fig. 3 comprises an outside platform 21 on which the plurality of hydrogen production units 15 and the plurality of DC-DC converters 16 are arranged.

Fig. 4 shows a further embodiment of a wind power plant 1'. The wind power plant 1' comprises at least one wind turbine installation 2' similar as the wind turbine installation 2 in Fig. 1. In particular, each wind turbine installation 2' comprises a generator device 7'.

In Fig. 4, three wind turbine installations 2' are shown exemplarily. However, the wind power plant 1' may also comprise less or more than three wind turbine installations 2'. The wind power plant 1' comprises at least one auxiliary installation 22. In the example of Fig. 4, the at least one auxiliary installation 22 is an offshore installation. However, the at least one auxiliary installation 22 may also be an onshore installation (e.g., in case of an onshore wind power plant).

The at least one auxiliary installation 22 includes a platform 23 on which the plurality of hydrogen production units 15 and the plurality of DC-DC converters 16 of the hydrogen production device 14 are arranged. It is noted that the above-described further components (not shown in the figures) of the hydrogen production device 14 may also be arranged at least partly at the platform 23 or they may be arranged at another location of the wind power plant 1'.

In Figs. 1 to 4, the DC-DC converters 16 of the hydrogen production device 14 are electrically connected by means of electrical connections (e.g., electrical cables) 24, 25, 26, 27 to the respective generator device 7, 7'. This may include in case of the auxiliary installation of Fig. 4, electrical connections (e.g., electrical cables) 25, 26 laid at least partially on the seabed 12 and/or electrical connections (e.g., electrical cables) 27 buried at least partially in the seabed 12.

In Figs. 1 to 4, exemplarily two or three hydrogen production units 15 and two or three DC-DC converters 16 are illustrated. However, "a plurality of hydrogen production units 15" may also encompass less or more than two/three hydrogen production units 15. Further, "a plurality of DC-DC converters 16" may also encompass less or more than two/three DC-DC converters 16.

The wind power plants 1, 1' (Figs. 1, 4) are, for example, off-grid wind power plants configured for operation in island mode. In other words, the electrical energy generated by the one or more generator devices 7, 7' can be directly and (e.g., almost) fully transformed by the hydrogen production device 14 into hydrogen. Hence, an electrical cable connection for transporting the generated electrical power from the wind power plant 1, 1' to a national grid may not be necessary.

As shown in Fig. 1, the wind power plant 1 further comprises a control device 28 for controlling the DC-DC converters 16 of the hydrogen production device 14. In particular, the control device 28 is configured for controlling the power supplied by each DC-DC converter 16 to the respective hydrogen production unit 15 based on a current power output P_{G} of the one or more generator devices 7. The control device 28 is only schematically shown in Fig. 1 with respect to its function but without indicating its physical location. The control device 28 may be arranged at any suitable location of the wind power plant 1, 1' or may be even arranged remote from the wind power plant 1, 1'.

Each DC-DC converter 16 is, in particular, configured for supplying power with a tunable output voltage to the corresponding hydrogen production unit 16.

Fig. 5 shows a circuit diagram of a DC microgrid 29 of the wind power plant 1, 1'. Shown in Fig. 5 are the one or more generator devices 7, 7' of the at least one wind turbine installation 2, 2'. The one or more generator devices 7, 7' are electrically connected (electrical link 30) to an AC-DC converter 31 for converting electrical AC current 32 generated by the one or more generator devices 7, 7' into DC current 33. The AC-DC converter 31 is electrically connected (electrical link 34) to a DC link 35 of the DC microgrid 29 for supplying the DC current 33 to the DC link 35.

Further shown in Fig. 5 are a plurality of hydrogen production units 15a, 15b, 15c and a plurality of DC-DC converters 16a, 16b, 16c of a hydrogen production device 14 (e.g., Fig. 1). In Fig. 5, exemplarily three hydrogen production units 15a, 15b, 15c and three DC-DC converters 16a, 16b, 16c are shown. However, there may also be provided more or less than three hydrogen production units 15a, 15b, 15c and three DC-DC converters 16a, 16b, 16c.

For each hydrogen production unit 15a, 15b 15c, a separate DC-DC converter 16a, 16b, 16c is provided for supplying DC power Pₐ, P_{b}, P_{c} to the respective hydrogen production unit 15a, 15b 15c. Each DC-DC converter 16a, 16b, 16c is directly electrically linked (electrical links 36a, 36b, 36c) to a respective hydrogen production unit 15a, 15b 15c. For example, the hydrogen production unit 15a is directly electrically connected (link 36a) to the DC-DC converter 16a and the DC-DC converter 16a is configured for delivering DC power Pₐ to the hydrogen production unit 15a. This applies similarly for the pair of the hydrogen production unit 15b and the DC-DC converter 16b as well as the pair of the hydrogen production unit 15c and the DC-DC converter 16c.

Furthermore, each of the plurality of DC-DC converters 16a, 16b, 16c is electrically connected (electrical links 37a, 37b, 37c) to the DC link 35 of the DC microgrid 29 for supplying the DC current 33 from the DC link 35 to the DC-DC converters 16a, 16b, 16c.

In Fig. 6 functional components 38, 39 of the control device 28 are shown. The control device 28 includes a first determining unit 38 for determining a control signal B (Bₐ, B_{b}, B_{c}) for controlling the plurality of DC-DC converters 16a, 16b, 16c. The control device 28 (e.g., the first determining unit 38) receives a value A of the current power output P_{G} from the one or more generator devices 7, 7'. The first determining unit 38 determines a control signal B based on the received value A of the current power output P_{G} of the one or more generator devices 7, 7'. In particular, the control device 28 generates a control signal Bₐ, B_{b}, B_{c} for each of the plurality of DC-DC converters 16a, 16b, 16c for supplying power Pₐ, P_{b}, P_{c} to the hydrogen production units 15a, 15b, 15c, respectively. By the generated control signal Bₐ, B_{b}, B_{c}, each of the plurality of DC-DC converters 16a, 16b, 16c is controlled to set the output voltage Uₐ, U_{b}, U_{c} of each of the plurality of DC-DC converters 16a, 16b, 16c such that the tunable output voltage of one, several or all of the plurality of DC-DC converters Uₐ, U_{b}, U_{c} is tuned up or down.

For example, during average wind conditions and an average current power output P_{G} of the one or more generator devices 7, 7', the control device 28 may generate the control signals Bₐ, B_{b}, B_{c} for the plurality of DC-DC converters 16a, 16b, 16c such that the same (non-zero) power Pₐ, P_{b}, P_{c} with the same (non-zero) voltage Uₐ, U_{b}, U_{c} is supplied to all three hydrogen production units 15a, 15b, 15c.

If the current power output P_{G} of the one or more generator devices 7, 7' decreases to below average level (e.g., due to low winds), the control device 28 may generate the control signals Bₐ, B_{b} for the plurality of DC-DC converters 16a, 16b, 16c such that a decreased power Pₐ, P_{b} with a decreased voltage Uₐ, U_{b} is supplied to a first and a second hydrogen production unit 15a, 15b. Further, the control device 28 may generate the control signal B_{c} for a third DC-DC converter 16c such that the supplied power P_{c} and the output voltage Uₐ are decreased to zero. In other words, in this example the first and second DC-DC converters 16a, 16b can be kept running with a decreased power supply which is still within the specification of the hydrogen production units 15a, 15b. Further, the third DC-DC converter 16c is switched off completely in this example. Thus, by having the tunable output voltage of the DC-DC converters 16a, 16b, 16c, the number of hydrogen production units 15a, 15b, 15c that need to be switched off completely can be reduced. This is of advantage since switching off hydrogen production units 15a, 15b, 15c decreases their lifetime. In addition, by having the tunable output voltage of the DC-DC converters 16a, 16b, 16c, operating the hydrogen production units 15a, 15b, 15c within their specifications with respect to the supplied power Pₐ, P_{b}, P_{c} and voltage Uₐ, U_{b}, U_{c} can be better ensured.

As shown in Fig. 5, the wind power plant 1, 1' and/or the DC microgrid 29 may optionally also comprises at least one AC load 40 and at least one DC-AC converter 41. The at least one AC load 40 may include, for example, one or more auxiliary devices of the wind turbine installation 2 such as one or more control devices (e.g., the control device 28), one or more safety-related devices, one or more heating devices, one or more cooling devices, one or more pumps, one or more lubrication devices, one or more lights, one or more dehumidifier, one or more pitch drives, and one or more yaw drives.

The at least one DC-AC converter 41 is electrically connected (electrical link 42) at its input terminal with the DC link 35. Furthermore, the at least one DC-AC converter 41 is electrically connected (electrical link 43) at its output terminal with the at least one AC load 40 for supplying AC power to the at least one AC load 40.

As shown in Fig. 5, the wind power plant 1, 1' and/or the DC microgrid 29 may optionally comprises in addition one or more storage devices 44 for storing electrical power and one or more further DC-DC converters 45 electrically linked (link 46) with the one or more storage devices 44. Moreover, the at least one further DC-DC converter 45 is electrically connected (electrical link 47) at its input terminal with the DC link 35.

The one or more storage devices 44 are, in particular, configured for discharging such that additional power is supplied to the DC microgrid 29 and for charging such that power is extracted from the DC microgrid 29. Furthermore, the one or more storage devices 44 are, in particular, configured for compensating oscillation damping-related output variations of the output power P_{G} of the one or more generator devices 7, 7'. The one or more storage devices 44 are, for example, configured
for a fast charging and discharging of electrical power. The one or more storage devices 44 are, for example, configured for charging and discharging electrical power with a frequency of 0.1 Hz or larger, 0.5 Hz or larger, 1 Hz or larger, 5 Hz or larger, 10 Hz or larger and/or 20 Hz or larger.

As illustrated in Fig. 1, the one or more wind turbine installations 2 each include one or more mechanical structures 9, 10 such as a drive train 9 and a tower 10.

Mechanical components 9, 10 of wind turbine installations 2 are subject to oscillations during operation of the wind turbine installations 2. These mechanical oscillations may cause wear or even damage of the respective components. Therefore, the control device 28 may be configured for active oscillation damping of mechanical oscillations of the one or more mechanical structures 9, 10 of the one or more wind turbine installations 2.

The active oscillation damping may include a measurement of tower acceleration, nacelle acceleration and/or rotational speed of one or more components of the drive train 9. Further, based on such oscillation measurements, a damping control signal is generated (e.g., sinusoidal offsets) which is added to a power or torque reference supplied to the generator system 7, 7'. Hence, a varying offset (e.g., sinusoidal offset) is added to a power or torque reference supplied to the one or more generator devices 7, 7' to control the one or more generator devices 7, 7'. Hence, the damping control causes a damping-related power output variation at an output terminal 48 (Fig. 5) of the one or more generator devices 7, 7'. The damping-related power output variation is a timely variation of the power output P_{G} (e.g., at high frequency).

To avoid that the power output variation of the one or more generator devices 7, 7' arrives at the plurality of hydrogen production units 15, 15a, 15b, 15c, the control device 28 may, for example, be configured for controlling charging and discharging of the one or more storage devices 44 with a frequency of 0.1 Hz or larger, 0.5 Hz or larger, 1 Hz or larger, 5 Hz or larger, 10 Hz or larger and/or 20 Hz or larger. The control device 28 (e.g., a second determining unit 39 of the control decic 28, Fig. 6) may, for example, be configured for receiving an information C on the oscillation damping-related power output variation of the one or more generator devices 7, 7'. The control device 28 (e.g., the second determining unit 39 of the control decic 28) may, for example, be configured for generating a control signal D based on the received information C for controlling the one or more further DC-DC converters 41 such that charging and discharging of the one or more storage devices 40 for compensating the oscillation damping-related power output variations is achieved.

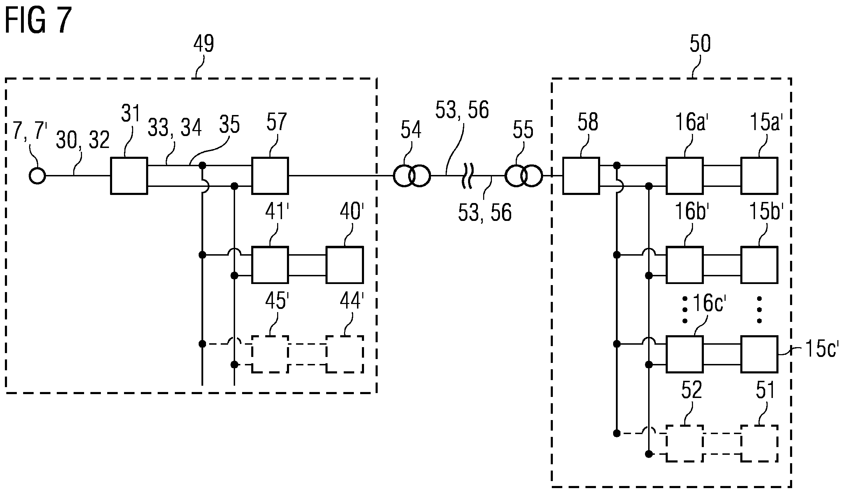

As shown in Fig. 7, the wind power plant 1, 1' may also comprise two or more DC microgrids 49, 50. In the following, only difference to the DC microgrid 29 in Fig. 5 are described.

A first one 49 of the at least two DC microgrids 49, 50 includes the one or more generator devices 7, 7'. A DC link 35 of the first microgrid 49 is electrically connected (electrical link 34) to the one or more generator devices 7, 7'. The DC link 35 of the first DC microgrids 49 is, in particular, electrically connected to the one or more generator devices 7, 7' via the AC-DC converter 31.

The first DC microgrid 49 further includes, for example, at least one AC load 40' and at least one DC-AC converter 41'. The at least one AC load 40' and the at least one DC-AC converter 41' in Fig. 7 are configured similarly as the at least one AC load 40 and the at least one DC-AC converter 41 shown in Fig. 5.

The first DC microgrid 49 further includes, for example, one or more storage units 44' and one or more further DC-DC converters 45'. The one or more storage units 44' and the one or more further DC-DC converters 45' in Fig. 7 are configured similarly as the one or more storage units 44 and the one or more further DC-DC converters 45 shown in Fig. 5. In particular, the one or more storage units 44' are configured for compensating variations of the output power P_{G} of the one or more generator devices 7, 7', the variations being caused by an active oscillation damping of mechanical oscillations of mechanical structures 9, 10 of the wind turbine installation(s) 2, 2'.

As displayed in Fig. 7, a second one 50 of the at least two DC microgrids 49, 50 includes a plurality of hydrogen production units 15a', 15b', 15c' and a plurality of DC-DC converters 16a', 16b', 16c'. The plurality of hydrogen production units 15a', 15b', 15c' and the plurality of DC-DC converters 16a', 16b', 16c' in Fig. 7 are configured similarly as the plurality of hydrogen production units 15a, 15b, 15c and the plurality of DC-DC converters 16a, 16b, 16c shown in Fig. 5.

The second DC microgrid 50 optionally includes, for example, one or more further storage units 51 and one or more further DC-DC converters 52 electrically connected to the one or more further storage units 51. The one or more further storage units 51 are, for example, configured for charging and discharging for providing additional power to the second DC microgrid 50 and to extract power from the second DC microgrid 50, respectively. Thus, with the one or more further storage units 51, a power balance of the second DC microgrid 50 can be improved and a stable power input to the plurality of hydrogen production units 15a', 15b', 15c' can be achieved.

The at least two DC microgrids 49, 50 are electrically connected with each other by one or more electrical links 53. The one or more electrical links 53 may be configured as low-voltage links transporting power with the same voltage as the voltage in the two DC microgrids 49, 50.

However, as shown exemplarily in Fig. 7, the one or more electrical links 53 may instead be configured as high-voltage links for reducing power losses. In this case, the wind power plant 1, 1' comprises at least one LV-HV transformer 54 for transforming low-voltage into high-voltage. The at least one LV-HV transformer 54 is directly electrically connected to the first DC microgrid 49. The wind power plant 1, 1' further comprises at least one HV-LV transformer 55 for transforming high-voltage into low-voltage. The at least one HV-LV transformer is directly electrically connected to the second DC microgrid 50. Further, at least one high-voltage cable 56 is electrically connecting the LV-HV transformer 54 and the HV-LV transformer 55 with each other.

A high-voltage link 56 is of particular advantage in case that a physical distance between the at least two DC microgrids 49, 50 is large. This might be the case in the embodiment of Fig. 1 in which the generator device 7 is located in the nacelle and the hydrogen production units 15 are located on a lower tower platform 17. Further, a high-voltage link 56 might be of even more advantage in the embodiment of Fig. 4 in which the generator devices 7' are located in the nacelles of different wind turbine installations 2' and the hydrogen production units 15 are located on a platform 23 of a separate auxiliary installation 22 located remote from the wind turbine installations 2'.

Furthermore, the one or more electrical links 53 between the two DC microgrids 49, 50 may be configured for transporting electrical current as AC current. In this case the first DC microgrid 49 may comprise a further DC-AC converter 57 electrically connected to the LV-HV transformer 54. In addition, the second DC microgrid 50 may comprise a further AC-DC converter 58 electrically connected to the HV-LV transformer 55.

In the following a method for operating a wind power plant 1, 1' is described.

In a first step S1 of the method, electrical power P_{G} is generated from wind power. The electrical power P_{G} is, in particular, generated by one or more generator devices 7, 7' of one or more wind turbine installations 2, 2'.

The generated electrical power P_{G} may be generated as AC power 32 and converter by an AC-DC converter 31 into DC current 33 and provided at a DC link 35.

In a second step S2 of the method, the generated electrical power P_{G} (e.g., the DC current 33) is supplied via a plurality of DC-DC converters 16, 16a-16c to a plurality of hydrogen production units 15, 15a-15c. Each DC-DC converter 16, 16a-16c is configured for supplying electrical power Pₐ, P_{b}, P_{c} with a tunable output voltage Uₐ, U_{b}, U_{c} to a respective one of the hydrogen production units 15, 15a-15c.

In a third step S3 of the method, the electrical power Pₐ, P_{b}, P_{c} supplied by each DC-DC converter 16, 16a-16c to the respective hydrogen production unit 15, 15a-15c is controlled based on the current power output P_{G} of the one or more generator devices 7, 7'.

Steps S2 and S3 are, in particular, carried out simultaneously.

In a fourth step S4 of the method, hydrogen is produced by the plurality of hydrogen production units 15, 15a-15c by means of the supplied electrical power Pₐ, P_{b}, P_{c}.

In an optional fifth step S5 of the method, active oscillation damping of mechanical oscillations of the one or more mechanical structures 9, 10 of the one or more wind turbine installations 2, 2' is carried out. The active oscillation damping causes damping-related variation of the power output P_{G} of the one or more generator devices 7, 7'.

In an optional sixth step S6 of the method, the damping-related power output variation of the one or more generator devices 7, 7' is compensated by charging and/or discharging one or more storage devices 44 for storing electrical power. Steps S5 and S6 can, for example, be carried out simultaneously to steps S1 to S4.

Although the present invention has been described in accordance with preferred embodiments, it is obvious for the person skilled in the art that modifications are possible in all embodiments.

## Claims

1. A wind power plant (1), comprising:
one or more generator devices (7) for generating electrical power (P_{G}) from wind power,
a plurality of hydrogen production units (15) for producing hydrogen from the generated electrical power (P_{G}),
a plurality of DC-DC converters (16) each being electrically connected with the one or more generator devices (7) and with a respective one of the plurality of hydrogen production units (15), and each DC-DC converter (16) being configured for supplying power (Pₐ) with a tunable output voltage (Uₐ) to the respective hydrogen production unit (15), and
a control device (28) for controlling the power (Pₐ) supplied by each DC-DC converter (16) to the respective hydrogen production unit (15) based on a current power output (P_{G}) of the one or more generator devices (7).

2. The wind power plant according to claim 1, comprising at least one AC-DC converter (31) for converting electrical AC current (32) generated by the one or more generator devices (7) into DC current (33) and supplying the DC current (33) to each of the plurality of DC-DC converters (16).

3. The wind power plant according to claim 1 or 2, wherein the control device (28) is configured for controlling the electrical power (Pₐ) supplied by at least one DC-DC converter (16) to the respective hydrogen production unit (15) such that a voltage value (Uₐ) of the supplied power (Pₐ) is increased or decreased from a non-zero first voltage value to a non-zero second voltage value.

4. The wind power plant according to one of claims 1 - 3, comprising:
one or more wind turbine installations (2) each including one or more mechanical structures (9, 10), wherein the control device (28) is configured for active oscillation damping of mechanical oscillations of the one or more mechanical structures (9, 10) of the one or more wind turbine installations (2), the active oscillation damping causing damping-related power output variation of the one or more generator devices (7), and
one or more storage devices (44) for storing electrical power, wherein the control device (28) is configured for controlling charging and discharging of the one or more storage devices (44) for compensating the damping-related power output variation of the one or more generator devices (7) .

5. The wind power plant according to claim 4, wherein the one or more storage devices (44) are configured for charging and discharging electrical power with a frequency of 0.1 Hz or larger, 0.5 Hz or larger, 1 Hz or larger, 5 Hz or larger, 10 Hz or larger and/or 20 Hz or larger.

6. The wind power plant according to claim 4 or 5, wherein the control device (28) is configured for controlling charging and discharging the one or more storage devices (44) with a frequency of 0.1 Hz or larger, 0.5 Hz or larger, 1 Hz or larger, 5 Hz or larger, 10 Hz or larger and/or 20 Hz or larger.

7. The wind power plant according to one of claims 1 - 6, comprising at least one AC load (40) and at least one DC-AC converter (41) electrically connected with the one or more generator devices (7) and the at least one AC load (40) for supplying AC power to the at least one AC load (40).

8. The wind power plant according to one of claims 1 - 7, comprising at least one DC microgrid (29), wherein the at least one DC microgrid (29) electrically interconnects one, several or all of a group of components including the plurality of DC-DC converters (16), the plurality of hydrogen production units (15), the one or more storage devices (44), one or more further DC-DC converters (45) electrically connected to the one or more storage devices (44), the at least one AC load (40) and the at least one DC-AC converter (41) electrically connected to the at least one AC load (40).

9. The wind power plant according to one of claims 1 - 8, comprising:
at least two DC microgrids (49, 50),
at least one LV-HV transformer (54) for transforming low-voltage to high-voltage, the at least one LV-HV transformer (54) being electrically connected to a first one (49) of the at least two DC microgrids (49, 50),
at least one HV-LV transformer (55) for transforming high-voltage to low-voltage, the at least one HV-LV transformer (55) being electrically connected to a second one (50) of the at least two DC microgrids (49, 50), and
at least one high-voltage cable (56) electrically connecting the LV-HV transformer (54) and the HV-LV transformer (55) with each other.

10. The wind power plant according to one of claims 1 - 9, comprising at least two DC microgrids (49, 50), wherein:
a first one (49) of the at least two DC microgrids (49, 50) is electrically connected to the one or more generator devices (7),
the first one (49) of the at least two DC microgrids (49, 50) includes the one or more storage units (44'), and/or
a second one (50) of the at least two DC microgrids (49, 50) includes the plurality of hydrogen production units (15) and the plurality of DC-DC converters (16) electrically connected to the plurality of hydrogen production units (15).

11. The wind power plant according to one of claims 1 - 10, comprising at least one wind turbine installation (2) including:
a tower (10),
a nacelle (8', 8") arranged at an upper end of the tower (10), and
at least one of the one or more generator devices (7) arranged at the nacelle (8', 8"),
wherein the plurality of hydrogen production units (15) and the plurality of DC-DC converters (16) are arranged at the respective nacelle (8', 8").

12. The wind power plant according to one of claims 1 - 10, comprising at least one wind turbine installation (2) including:
a tower (10),
an outside platform (17) arranged at the tower (10),
a nacelle (8) arranged at an upper end of the tower (10), and
at least one of the one or more generator devices (7) arranged at the nacelle (8),
wherein the plurality of hydrogen production units (15) and the plurality of DC-DC converters (16) are arranged at the outside platform (17).

13. The wind power plant according to one of claims 1 - 10, comprising:
at least one wind turbine installation (2') including:
a tower (10),
a nacelle (8) arranged at an upper end of the tower (10), and
at least one of the one or more generator devices (7') arranged at the nacelle (8), and
an auxiliary installation (22) including a platform (23), wherein the plurality of hydrogen production units (15) and the plurality of DC-DC converters (16) are arranged at the platform (23) of the auxiliary installation (22).

14. The wind power plant according to one of claims 1 - 13, wherein the wind power plant (1) is an off-grid wind power plant configured for operation in island mode.

15. A method for operating a wind power plant (1), comprising:
a) generating (S1) electrical power (P_{G}) from wind power,
b) supplying (S2) the generated electrical power (P_{G}) via a plurality of DC-DC converters (16) to a plurality of hydrogen production units (15), wherein each DC-DC converter (16) is configured for supplying electrical power (Pₐ) with tunable output voltage (Uₐ) to a respective one of the hydrogen production units (15),
c) controlling (S3) the electrical power (Pₐ) supplied by each DC-DC converter (16) to the respective hydrogen production unit (15) based on a current power output (P_{G}) of the one or more generator devices (7), and
d) producing (S4) hydrogen, by the plurality of hydrogen production units (15), from the supplied electrical power (Pₐ).
